# FASCICULE DE BREVET EUROPEEN

(11) **EP 2 562 450 B1**
(45) Date de publication et mention de la délivrance du brevet: **15.01.2014**
(21) Numéro de dépôt: 12305934.7
(22) Date de dépôt: 30.07.2012
(51) Int. Cl.: F16K 11/14, F16K 37/00

(54) **Vanne trois-voies**
Dreiwegeventil
Three-way valve

(30) Priorité: 23.08.2011 FR 1157463
(43) Date de publication de la demande: 27.02.2013
(73) Titulaire: Valeo Systèmes de Contrôle Moteur, 95800 Cergy Saint Christophe (FR)
(72) Inventeur: Hodebourg, Grégory, SARTROUVILLE 78500 (FR); Adenot, Sébastien, 95300 PONTOISE (FR)

(56) Documents cités:
- WO-A1-2009/106727
- GB-A- 2 280 243
- US-A- 4 501 295
- US-A- 5 704 398

## Description

Le domaine de la présente invention est celui de l'automobile et, plus particulièrement, celui des équipements pour l'alimentation du moteur.

Un moteur thermique de véhicule automobile comporte une chambre de combustion, généralement formée par une pluralité de cylindres, dans laquelle un mélange de carburant et d'air est brûlé pour générer le travail du moteur. L'air peut être comprimé ou non, selon que le moteur comporte ou pas un turbocompresseur. Dans le cas d'un moteur avec turbocompresseur, l'air, comprimé par le compresseur, est admis dans le moteur où il est brûlé avec le carburant puis évacué par les canalisations d'échappement. Les gaz d'échappement entraînent une turbine, solidaire du compresseur et formant avec lui le turbocompresseur.

L'air d'admission peut par ailleurs être mélangé à des gaz d'échappement ; on parle de gaz d'échappement recirculés et d'une circulation des gaz le long d'une boucle dite boucle EGR (pour Exhaust gas recirculation ou recirculation des gaz d'échappement). Les gaz admis dans la chambre de combustion sont alors dénommés gaz d'admission. On obtient de la sorte une diminution des émissions polluantes, en particulier des émissions d'oxydes d'azote.

La recirculation des gaz d'échappement peut être dite "basse pression", lorsqu'elle est faite sur des gaz d'échappement prélevés après la turbine et réintroduits avant le compresseur, ou "haute pression", lorsqu'elle est faite avec des gaz prélevés avant la turbine et réintroduits après le compresseur. A titre d'exemple, la recirculation basse pression est principalement utilisée, sur un moteur à essence, pour diminuer la consommation de carburant et obtenir un meilleur rendement moteur.

Les gaz sont donc amenés par diverses canalisations et le contrôle de leur circulation est fait grâce à des vannes, qui autorisent, inhibent ou régulent leurs mouvements dans ces canalisations. Dans le cas d'une boucle EGR, il a déjà été proposé des vannes dite "trois-voies". Une telle vanne peut être disposée en amont du compresseur du turbocompresseur, c'est-à-dire sur la canalisation d'admission du mélange, où elle régule la quantité d'air circulant dans ladite canalisation et la quantité de gaz d'échappement admise dans celle-ci. On dit alors que la vanne est disposée du côté froid du moteur car elle placée sur la ligne d'admission plutôt que sur la ligne d'échappement.

Pour une vanne trois-voies disposée du côté froid, plusieurs modes opératoires de la vanne, et donc du moteur, peuvent être envisagés. Le moteur peut ne recevoir que de l'air frais, sans gaz d'échappement recirculés. Le moteur peut aussi recevoir de l'air frais mélangé à une partie des gaz d'échappement, la différence de pression entre l'échappement et l'admission du moteur étant alors suffisante pour assurer la recirculation des gaz d'échappement. Quand la différence de pression n'est pas suffisante pour la recirculation des gaz d'échappement et pour assurer le bon taux EGR, on peut créer une contre-pression par étranglement de la voie d'échappement en aval de la boucle EGR, pour ainsi forcer une partie des gaz d'échappement vers la voie d'admission du moteur. Cette solution, par sa complexité, n'est toutefois pas très satisfaisante et il est préférable d'utiliser la boucle EGR de la façon suivante.

Le débit d'air frais dans la voie d'arrivée de l'air de la vanne EGR étant maximum, on ouvre progressivement la voie des gaz EGR dans la vanne et, avant que le débit des gaz EGR dans la vanne n'augmente plus, on ferme progressivement la voie d'arrivée de l'air frais pour continuer de faire croître le débit des gaz EGR, suivant une courbe monotone croissante.

Une demande de brevet a été déposée par la demanderesse, sous le numéro WO 2009/106727, qui décrit une vanne trois-voies à deux volets dans laquelle les deux volets sont disposés dans les deux voies d'entrée de la vanne et sont actionnés avec un décalage temporel par un même moyen d'actionnement.

Cette configuration ne prévoit qu'un seul capteur pour connaître la position des volets, qui est placé sur la commande du volet des gaz recirculés (voie des gaz ou voie EGR). II s'ensuit qu'une défaillance sur la voie de commande du volet d'admission d'air (voie Air) n'est pas détectée.

Une première solution pour résoudre ce problème serait de placer un second capteur sur la voie air. Cette solution n'est cependant pas satisfaisante en raison du coût et de l'encombrement des composants supplémentaires qu'elle implique.

La présente invention a pour but de remédier à ces inconvénients en proposant une vanne trois-voies adaptée pour qu'un défaut sur l'une des voies, Air ou EGR, puisse être détectée à l'aide d'un seul capteur.

A cet effet, l'invention a pour objet une vanne trois-voies à deux obturateurs respectivement disposés dans deux des trois voies de la vanne, ladite vanne comprenant des moyens de commande uniques pour les deux obturateurs et des premier et second moyens d'actionnement, agencés pour être commandés par les moyens de commande uniques et entraîner, chacun, un des deux obturateurs de l'une à l'autre d'une première et d'une seconde position, lesdits moyens de commande et d'actionnement étant configurés pour permettre aux deux obturateurs, dans un mode nominal de fonctionnement, d'atteindre simultanément leur seconde position respective.

Selon l'invention, ladite vanne comporte une butée de déplacement maximal pour l'un au moins desdits moyens d'actionnement, ladite butée étant configurée pour bloquer ledit moyen d'actionnement lorsque l'obturateur correspondant est dans sa seconde position, ladite vanne comprenant en outre des moyens pour détecter une course dudit autre obturateur au-delà de sa seconde position.

Ainsi, selon l'invention, on vérifie l'intégrité des chaînes cinématiques sur l'ensemble des voies, ceci à l'aide de moyens de détection prévus sur seulement l'une d'elles. Les moyens de détection permettent de diagnostiquer non seulement un défaut sur la voie équipée mais aussi sur l'autre voie. En effet, si l'obturateur monté sur la voie équipée des moyens de détection dépasse la position prescrite, c'est que le moyen d'actionnement de l'obturateur monté sur l'autre voie n'a pas atteint sa position de butée et qu'il y a un défaut dans la cinématique correspondante.

Dans l'exemple d'application évoqué plus haut, les moyens de détection permettent de la sorte de repérer un dépassement de la position de pleine ouverture par le volet des gaz et donc une défaillance dans la cinématique de la chaine Air, sans capteur supplémentaire.

Selon différents modes de réalisation qui pourront être pris ensemble ou séparément :
- lesdits moyens pour détecter une course de l'autre obturateur au-delà de sa course nominale comprennent un moyen de mesure de la position dudit autre obturateur,
- ladite butée de déplacement maximal est prévue pour bloquer ledit second moyen d'actionnement et lesdits moyens pour détecter une course de l'autre obturateur au-delà de sa course nominale comprennent une butée du premier moyen d'actionnement, configurée pour être positionnée au delà de la position qu'a ledit premier moyen d'actionnement lorsque le second moyen d'actionnement est sur sa butée en mode de fonctionnement nominal,
- lesdits moyens pour détecter une course de l'autre obturateur au-delà de sa course nominale comprennent en outre une butée de fin course, prévue sur ledit premier moyen d'actionnement et un détecteur de contact entre lesdites butées de fin de course et dudit premier moyen d'actionnement,
- lesdits obturateurs sont des volets, lesdits moyens de commande et d'actionnement sont configurés pour entraîner lesdits volets en pivotement et les premier et second moyens d'actionnement comportent des secteurs de couronnes dentées,
- ladite butée du premier moyen d'actionnement est disposée en vis-à-vis d'une des faces formant extrémité du secteur de couronnes dentées correspondant.

Selon un exemple de mise en oeuvre, le second moyen d'actionnement comprend en outre un doigt circulant dans une échancrure formée dans le secteur de couronne dentée du second moyen d'actionnement, la butée associée audit second moyen d'actionnement étant solidaire du corps de la vanne et positionnée en vis-à-vis dudit doigt.

Selon une variante, le second moyen d'actionnement comporte en outre une roue de pilotage, liée en rotation au premier volet et libre en rotation par rapport audit secteur de couronne dentée, ladite roue de pilotage étant apte à être entraînée par ledit secteur de couronne dentée, lorsque ledit premier volet passe de sa première position à sa seconde position. Ladite roue de pilotage comporte, par exemple, une butée de diagnostique configurée pour venir en butée contre la butée de déplacement maximal lorsque le second obturateur est dans sa seconde position.

Selon un aspect de l'invention, lesdites première et seconde positions sont des positions d'ouverture et de fermeture d'une des voies.

Selon un autre aspect de l'invention, lesdits moyens de commande et d'actionnement sont configurés pour entraîner lesdits obturateurs avec un déphasage temporel de sorte que tout en continuant de déplacer le premier obturateur de sa première position vers sa seconde position par l'intermédiaire du premier moyen d'actionnement pour ouvrir, respectivement fermer, la voie correspondante, on commence à déplacer le second obturateur de sa première position vers sa seconde position par l'intermédiaire du second moyen d'actionnement, pour fermer, respectivement ouvrir, la voie correspondante.

Selon un autre aspect de l'invention, ledit second moyen d'actionnement est rappelé par un ressort de rappel de sa seconde position vers sa première position.

Selon un autre aspect de l'invention, les obturateurs sont disposés dans ses deux voies d'entrée, la vanne étant alors une vanne de boucle EGR pour côté froid, reliée au collecteur d'admission d'un moteur à combustion interne d'un véhicule automobile.

L'invention concerne aussi un procédé de test de l'intégrité de la chaîne cinématique d'une vanne trois-voies telle que décrite plus haut, ledit procédé comportant une étape de mise en mouvement dudit premier moyen d'actionnement par lesdits moyens de commande unique, depuis la première position de l'obturateur associé en direction de la seconde position dudit obturateur, suivie d'une étape de mesure de la position extrême atteinte par ledit volet.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique d'une boucle EGR installée sur un moteur turbocompressé, selon l'art antérieur ;
- les figures 2a à 2d sont des vues schématiques montrant, de façon générique, le fonctionnement de la vanne trois-voies d'une boucle EGR, avec les différentes positions prises par ses volets ;
- les figures 3 à 5 montrent les dispositifs de commande des deux volets d'un premier mode de réalisation d'une vanne trois-voies selon l'invention, dans les positions correspondant aux cas représentés respectivement sur les figures 2a, 2b et 2d ;
- la figure 6 est un schéma de principe montrant la vanne trois-voies des figures 3 à 5, en fonctionnement normal, dans la position correspondant à la figure 2a ;
- la figure 7 est un schéma de principe montrant la vanne trois-voies précédente, en fonctionnement normal, dans la position correspondant à la figure 2d,
- la figure 8 est un schéma de principe montrant la vanne trois-voies précédente, dans la position correspondant à la figure 2d, dans le cas d'une rupture survenue dans l'entraînement de la voie Air,
- la figure 9 est un schéma de principe montrant la vanne trois-voies précédente, dans une position de repli consécutive à une rupture du ressort de rappel du volet de la voie Air, et
- la figure 10 est une vue en perspective partielle d'un second mode de mise en oeuvre d'une vanne trois voies selon l'invention.

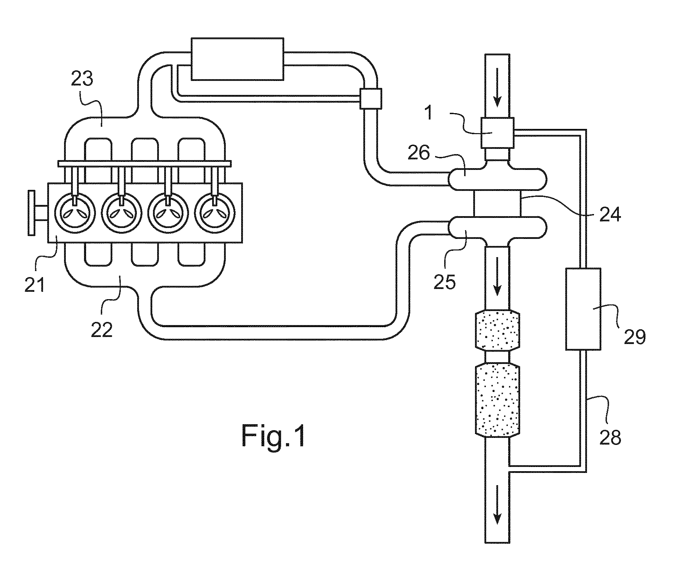

En se référant à la figure 1, on voit un moteur à combustion interne 21 d'un véhicule automobile, muni d'une boucle de recirculation des gaz d'échappement (EGR), comprenant un collecteur d'admission 23 du moteur pour recevoir l'air et les gaz d'échappement d'un compresseur 26 d'un turbo-compresseur 24, un collecteur d'échappement 22 des gaz de combustion, une turbine 25 de turbo-compresseur 24 et la boucle EGR 28, avec un refroidisseur 29 et la vanne trois-voies 1 basse pression qui est disposée en amont du compresseur 26 du turbo-compresseur 24. Cette vanne trois-voies est reliée au compresseur par sa sortie et comporte deux entrées pour recevoir de l'air frais (voie Air) et les gaz d'échappement refroidis (voie EGR ou voie des gaz), en un mélange dont la pression est augmentée par le compresseur 26.

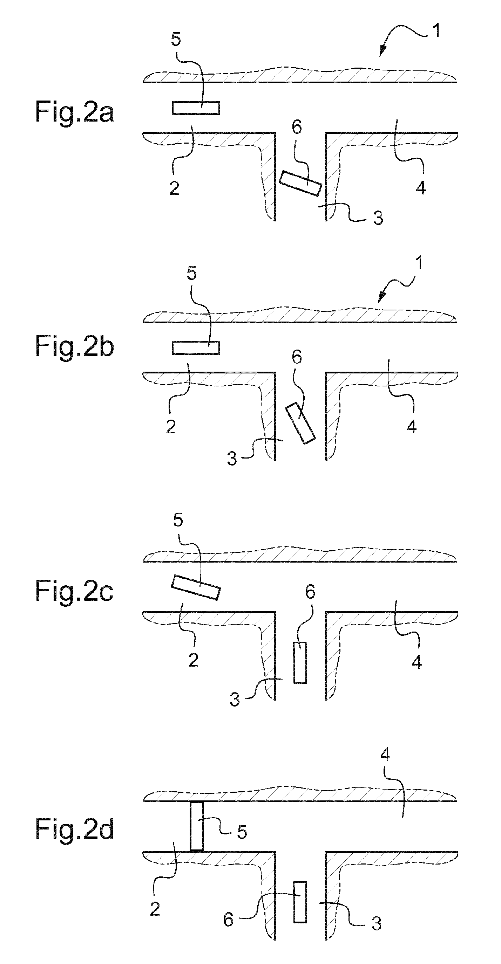

Sur les figures 2a à 2d est représentée schématiquement la vanne trois-voies 1, avec son entrée d'air 2, son entrée de gaz d'échappement recirculés 3 et une sortie du mélange d'air et de gaz 4. La vanne 1 est ici une vanne à deux volets, un volet 5 dans la voie d'entrée d'air 2 et un volet 6 dans la voie d'entrée de gaz 3. Le fonctionnement de la vanne, lorsqu'il s'agit de mettre en service la boucle EGR est le suivant : au départ, le volet d'air 5 est dans une position angulaire (0°) permettant un débit d'air maximal dans la voie 2 et le volet d'arrivée des gaz 6 est dans une position angulaire (90°) obturant la voie 3. Cette situation est celle dans laquelle fonctionne le moteur, par exemple à l'arrêt au ralenti.

La mise en service de la boucle se traduit par un début de pivotement du volet d'arrivée des gaz 6, sans que le volet d'air 5 ne pivote, ouvrant ainsi progressivement la voie 3 aux gaz d'échappement EGR (figure 2a). Le volet d'air 5 restant toujours dans la même position d'ouverture maximale de l'entrée d'air 2, le volet des gaz 6 continue de pivoter pour considérablement ouvrir la voie des gaz 3 (figure 2b). Dans une certaine position angulaire du volet des gaz 6, ici de 35°, c'est-à-dire après une rotation de 55°, le débit des gaz EGR dans la voie 3 n'augmente pratiquement plus et, tout en continuant de faire pivoter le volet des gaz 6, on commence alors à faire pivoter le volet d'air 5 pour fermer la voie d'arrivée d'air 2 et ainsi forcer le moteur à aspirer d'avantage de gaz EGR (figure 2c). Cette phase peut se poursuivre jusqu'à une position extrême où le volet des gaz 6 atteint la position angulaire (0°) d'ouverture maximale de la voie d'entrée de gaz 3 et où le volet d'air se trouve dans la position angulaire (90°) d'obturation de la voie d'entrée d'air 2 (figure 2d).

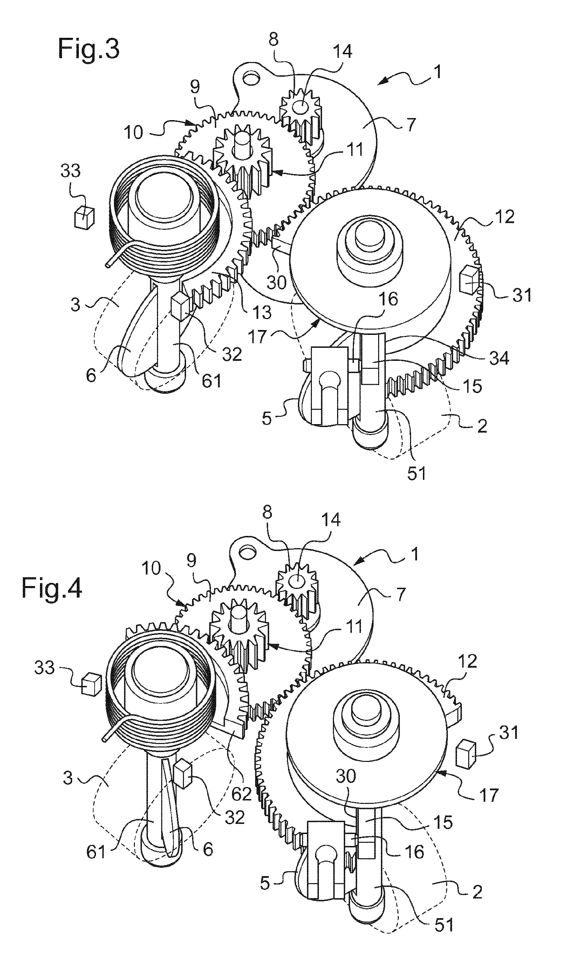

Une cinématique permettant la mise en oeuvre d'une vanne trois-voies 1 selon l'invention, fonctionnant selon le principe défini ci-dessus, va maintenant être décrite en référence aux figures 3 à 5.

La cinématique de la vanne trois-voies 1 comporte un engrenage s'étendant, ici, entre un moteur à courant continu 7 et deux arbres 51, 61 d'entraînement en rotation, respectivement, du volet d'air 5 et du volet des gaz 6. Les deux arbres 51, 61 s'étendent parallèlement l'un à l'autre. De l'arbre 14 du moteur électrique 7 est solidaire un pignon 8 d'entraînement d'une roue dentée intermédiaire 9 portant une denture périphérique 10 et une denture centrale 11. La denture périphérique 10 de la roue intermédiaire engrène avec une couronne dentée 12 d'entraînement en rotation du volet d'air 5. La couronne dentée 12 est libre en rotation par rapport à l'axe 51 du volet 5. L'entraînement en rotation de ce volet 5 par la couronne 12 se fait par l'intermédiaire d'un doigt d'entraînement 15 qui est, lui, solidaire en rotation de l'axe 51 du volet 5. Ce doigt 15 est disposé au repos contre une butée réglable, ou butée basse air 16, qui est solidaire du corps de la vanne (non représenté). La couronne 12 comporte une échancrure angulaire 17 adaptée pour permettre la rotation libre de la couronne 12 sur un secteur angulaire défini, sans entraîner le doigt 15, et donc sans entraîner le volet 5. C'est lorsque la couronne 12 est entraînée en rotation au-delà de ce secteur angulaire, dans un sens ou dans l'autre, qu'un premier bord de l'échancrure 17, formant une butée d'entraînement 30, entraîne alors le doigt 15. Comme cela sera développé plus loin, le bord opposé de l'échancrure 17 de la couronne 12 forme également une butée, dite butée de retour 34.

La denture centrale 11 de la roue intermédiaire 9 engrène quant à elle avec une couronne dentée 13 d'entraînement en rotation du volet des gaz 6. La couronne dentée 13 est, quant à elle, solidaire en rotation de l'axe 61 du volet 6. Elle ne s'étend circulairement que sur un secteur angulaire, dont les extrémités présentent des faces radiales aptes à coopérer avec des pièces solidaires du corps de la vanne, qui forment des butées pour le déplacement circulaire de la couronne dentée 13, comme cela sera expliqué plus loin.

En mode normal, sous l'action du moteur 7, le volet 6 est donc entraîné en rotation directement par la rotation de la couronne 13, tandis que le volet 5 est entraîné en rotation seulement lorsque la couronne 12 entraîne en rotation le doigt 15.

Dans l'exemple considéré, le moteur électrique 7, par son pignon 8 lorsqu'il est entraîné en rotation dans le sens contraire des aiguilles d'une montre, entraîne la roue intermédiaire 9 en rotation dans le sens des aiguilles d'une montre. A son tour, la roue 9, par ses dentures 10, 11 entraîne, dans le sens contraire des aiguilles d'une montre, les deux couronnes dentées 12, 13, qui sont donc entraînées en rotation par la même roue intermédiaire 9, mais via deux dentures différentes 10, 11. A titre d'exemple, le rapport d'engrenage entre l'arbre 14 du moteur électrique 7 et le volet des gaz 6 est ici d'environ 16, alors que le rapport entre l'arbre 14 et le volet d'air 5 lorsqu'il est entraîné est d'environ 7.

Le mécanisme de déphasage de la fermeture du volet d'air 5 va maintenant être décrit, en relation avec les figures 3, 4 et 5 qui montrent les couronnes et roues dentées à différentes étapes de la rotation du pignon 8.

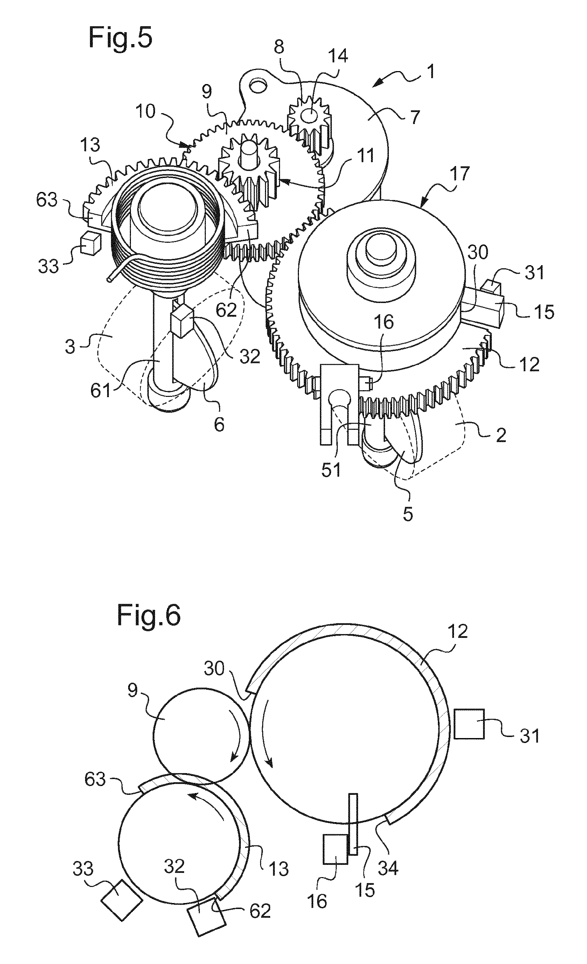

De la figure 3 à la figure 4, les couronnes 12 et 13 sont entraînées dans le sens contraire des aiguilles d'une montre de façon à provoquer l'ouverture du volet des gaz 6 tandis que le volet d'air 5 reste immobile et ce grâce à l'échancrure angulaire 17. Sur la position de la figure 4, le bord de cette échancrure 17 qui forme la butée d'entrainement 30, vient en contact avec le doigt 15. La rotation de la couronne 12 se poursuit alors en direction de la position représentée sur la figure 5, le doigt 15 (et par conséquent le volet 5) étant alors entraîné en rotation par la butée d'entraînement 30. Le volet d'air 5 se ferme donc avec un déphasage temporel par rapport au volet des gaz 6, grâce à la présence de l'échancrure 17.

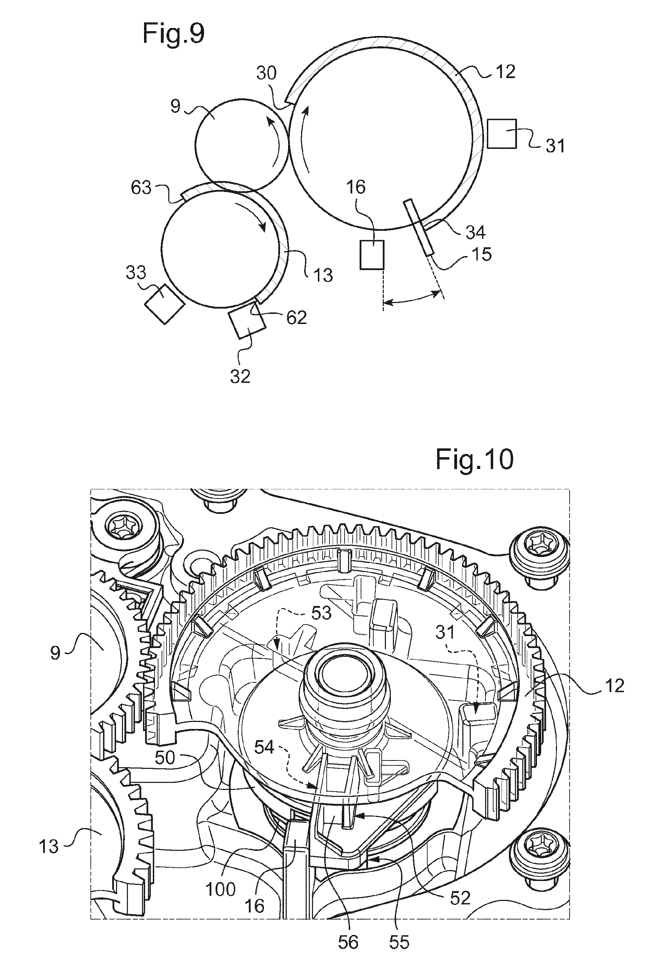

Sur les figures 3 à 5 sont également représentées plusieurs butées associées aux couronnes dentées 12 et 13. On trouve sur la voie Air, une butée haute air 31, solidaire du corps de la vanne 1, qui correspond à la position extrême qu'atteint le doigt 15 lorsque le volet d'air 5 se trouve dans la position plein fermée. Le doigt 15, en fonctionnement normal, se déplace ainsi, dans un sens sous l'action de la butée d'entraînement 30 et dans l'autre sens sous l'action d'un ressort de rappel (non représenté), entre la butée basse air 16 et la butée haute air 31. Ce déplacement correspond à une rotation du volet d'air 5 entre la position plein ouvert et la position plein fermé. On remarque également sur la figure 3 que la couronne dentée 12 d'entraînement du volet air 5 et la butée de retour 34 ne viennent pas en contact avec le doigt d'entraînement 15, qui est rappelé contre la butée basse air 16, quand la vanne trois-voies est dans la configuration de la figure 2a (volet d'air ouvert et volet des gaz fermé). La cinématique des roues et couronnes dentées est telle qu'elle laisse subsister un jeu entre la butée de retour 34 et la butée basse air qui est supérieur à l'épaisseur du doigt d'entraînement 15. L'utilité de ce jeu sera détaillée plus loin, en relation avec la figure 9.

Parallèlement on trouve, sur la voie EGR, deux butées, une butée basse gaz 32 et une butée haute gaz 33 associées aux positions extrêmes que peuvent prendre, respectivement, la première 62 et la seconde 63 extrémité de la couronne dentée 13 d'entraînement du volet des gaz 6.

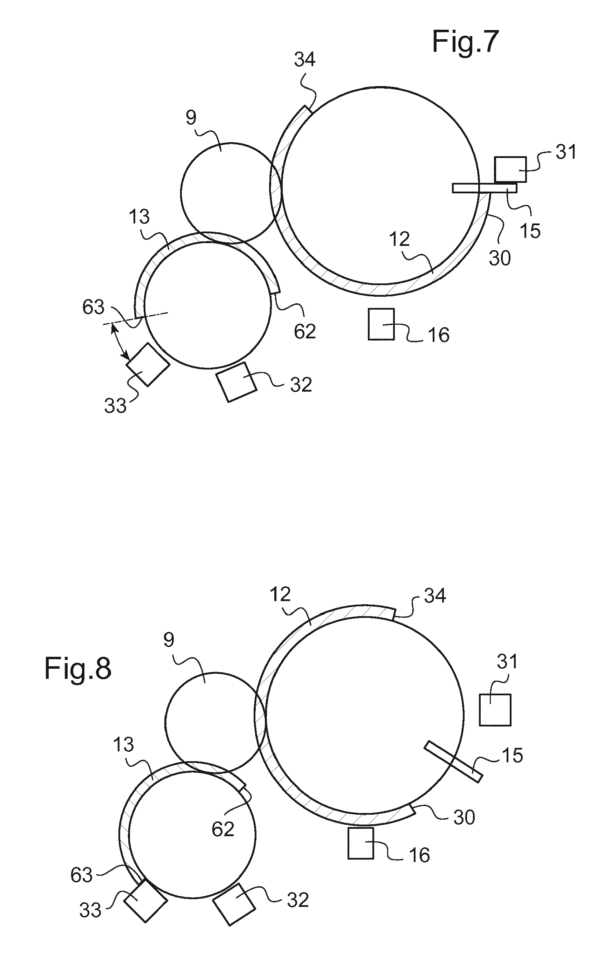

La fonction des butées ci-dessus sera mieux expliquée, en relation avec les figures 6 à 9 qui sont représentatives du fonctionnement d'une vanne trois-voies selon l'invention. Sur ces figures la denture centrale 11 et la denture périphérique 10 de la roue dentée intermédiaire 9 ont été confondues pour des raisons de simplification du dessin. La figure 6 correspond à un fonctionnement de la vanne 1 en mode normal, dans la configuration de la figure 2a, c'est-à-dire volet d'air 5 plein ouvert et volet des gaz 6 plein fermé. La figure 7 correspond à un fonctionnement de la vanne 1 en mode normal, dans la configuration de la figure 2d, c'est-à-dire volet d'air 5 plein fermé et volet des gaz 6 plein ouvert. Quant à la figure 8, elle représente un premier mode de fonctionnement défectueux, dans lequel le volet d'air 5 n'est plus entraîné, le doigt 15 n'atteignant pas la butée haute air 31 et dans lequel le volet des gaz 6 dépasse la position plein ouvert, la seconde extrémité 63 de sa couronne dentée 13 arrivant alors en butée contre la butée haute gaz 33. Enfin, la figure 9 représente un second mode de fonctionnement défectueux, dans lequel le volet d'air 5 n'est plus rappelé vers la position plein ouvert, le ressort de rappel étant supposé cassé ou bien un point dur dans la cinématique de la voie Air empêchant le retour du doigt 15 sous la simple force exercée par ce ressort.

Le fonctionnement de l'invention est décrit, tout d'abord dans le mode normal en référence aux figures 6 et 7, puis dans le mode défectueux correspondant à la figure 8.

La figure 6 représente la situation des éléments de la vanne 1 dans la configuration de la figure 2a, c'est-à-dire avant l'introduction de gaz recirculés. La roue dentée intermédiaire 9 a amené la première extrémité 62 de la couronne 13 d'entraînement du volet des gaz en butée contre la butée basse gaz 32, ce qui correspond à la position plein fermée pour le volet des gaz 6. Parallèlement la couronne dentée 12 d'entraînement du volet d'air est dans une position telle que sa butée d'entraînement 30 est éloignée du doigt d'entraînement 15 ; celui-ci repose en appui contre la butée réglable 16, sous l'action du ressort de rappel qui tend à ramener le volet d'air 5 vers sa position plein ouvert. Sa butée de retour 34, bien que la couronne dentée 12 soit dans l'une de ses position angulaires extrême, n'est pas en contact avec le doigt d'entraînement 15.

La mise en service de la recirculation des gaz se traduit par une rotation de la roue dentée intermédiaire 9. D'une part cette rotation fait tourner la couronne dentée 13 du volet des gaz et éloigne sa première extrémité 62 de la butée basse gaz 32 pour rapprocher sa seconde extrémité 63 de la butée haute gaz 33, sans toutefois l'atteindre ; d'autre part elle fait tourner la roue dentée 12 du volet d'air ce qui, dans un premier temps, rapproche la butée d'entraînement 30 du doigt 15 puis, dans un deuxième temps entraîne celui-ci en rotation jusqu'à ce qu'il vienne en appui contre la butée haute air 31. La situation de la vanne 1 est alors celle représentée sur la figure 7, qui correspond au cas de la figure 2d, avec le volet d'air 5 plein fermé et le volet des gaz 6 plein ouvert.

On remarque sur la figure 7 que la rotation de la roue dentée intermédiaire 9 est bloquée par l'appui du doigt 15 contre la butée haute air 31 et qu'elle ne peut pas poursuivre sa rotation. Dans cette situation l'invention prévoit que la chaîne cinématique des roues dentées soit telle que la seconde extrémité 63 de la couronne dentée 13 n'entre pas en contact avec la butée haute gaz 33, mais qu'un jeu subsiste entre elles. Ce jeu n'a pas vocation à être annulé, tant que la vanne est dans son fonctionnement normal.

La figure 8 représente le fonctionnement de la vanne 1 dans le premier cas évoqué d'un disfonctionnement, c'est-à-dire celui d'une rupture des dentures dans les cinématiques, d'un problème d'embrayage ou d'une rupture du doigt d'entraînement 15. II n'y a alors plus de liaison biunivoque entre les engrenages des couronnes dentées 12 et 13. Du fait de la rupture dans l'entraînement du doigt 15 par la roue dentée intermédiaire 9, celui-ci ne vient pas en butée contre la butée haute air, ou s'il s'y trouve, il n'oppose pas de résistance à une poursuite de la rotation de la roue intermédiaire 9. Celle-ci entraîne donc la couronne dentée 13 d'entraînement du volet des gaz au delà de la position plein ouvert du volet de gaz 6 et sa seconde extrémité 63 vient heurter la butée haute gaz 33.

Un capteur de la position du volet des gaz 6, placé quelque part sur la voie EGR, que ce soit sur le volet 6, son axe 61 ou la couronne dentée 13 sera apte à détecter cette rotation complémentaire de la couronne dentée et à déclencher une alerte de défaillance de la voie Air.

Une méthode de diagnostic du bon fonctionnement de la voie Air peut aussi être mise en place, grâce à une vanne trois-voies configurée selon l'invention.

Elle consiste à lancer une rotation de la roue dentée intermédiaire 9 de façon que la couronne dentée 13 d'entraînement du volet des gaz effectue un parcours complet, depuis la position où sa première extrémité 62 est sur la butée basse gaz 32 et où le volet des gaz 6 est en position plein fermée, vers la position de pleine ouverture de ce volet. Dans le cas où la voie Air est saine, la rotation de la roue dentée 9 s'arrêtera lors du contact du doigt d'entraînement 15 avec la butée haute air 31 et le capteur détectera une position du volet des gaz 6 correspondant à la position plein ouvert. Dans le cas contraire le doigt ne sera pas entraîné et ne fournira aucun blocage à la roue de la roue intermédiaire 9 ; celle-ci entraînera la couronne dentée 13 qui dépassera la position plein ouvert de la vanne des gaz 6 et ne sera stoppée que par la venue de sa seconde extrémité 63 sur la butée haute gaz 33. Par cette rotation excessive le capteur de position du volet des gaz détectera alors la défaillance survenue sur la voie Air. Une telle méthode de diagnostique est effectuée, par exemple, à chaque démarrage du véhicule et une éventuelle défaillance sera signalée au conducteur par une information remontant au tableau de bord.

Un autre moyen de détection d'une défaillance de la voie Air peut être réalisé par la mise en place d'un détecteur de contact entre la seconde extrémité 63 de la couronne dentée 13 et la butée haute gaz 33.

La figure 9 représente la position que l'on donne à la vanne 1 dans le deuxième cas de disfonctionnement évoqué, dans lequel le doigt 15 n'est plus rappelé contre la butée basse air 16. Un tel cas peut, par exemple, survenir à la suite d'une rupture du ressort de rappel ou bien de l'apparition dans la chaîne de commande, d'un point dur que la force exercée par le ressort de rappel ne peut pas vaincre.

Dans ce cas l'actionnement du moteur électrique 7 pour revenir à la position correspondant à la figure 2a entraînera une rotation de la couronne dentée 12 d'entraînement du volet air 5 dans le sens des aiguilles d'une montre et le retour de l'extrémité de son échancrure formant butée de retour 34 vers la butée basse air 16. Ce faisant, cette butée de retour entraîne le doigt 15 en direction de la butée basse air 16, à partir de l'endroit où il se trouve bloqué, et amène le volet d'air 5 dans une position proche de sa position plein ouvert. Autrement dit, on se sert du couple développé par le moteur électrique 7 pour pallier la défaillance du ressort. Le moteur du véhicule peut donc continuer à fonctionner malgré la panne constatée sur le fonctionnement de la vanne trois-voies.

Un jeu est toutefois laissé entre le doigt 15 et la butée basse air 16 pour qu'en fonctionnement normal, la butée de retour 34 ne vienne pas interférer, par exemple sous l'action de vibrations, avec le positionnement du doigt d'entraînement 15.

La figure 10 illustre une variante de réalisation des moyens d'actionnement de la voie air. Dans celle-ci, on trouve le secteur de couronne dentée 12, représenté en transparence, et le ressort de rappel, dont des spires 100 sont partiellement visibles, accompagnés d'une roue de pilotage 50. Cette dernière est liée en rotation au volet air, non-représenté, et libre en rotation par rapport au secteur de couronne dentée 12.

Ladite roue de pilotage 50 est apte à être entraînée par ledit secteur de couronne dentée 12, lorsque ledit volet air passe de sa position plein ouvert à sa position plein fermé, et par le ressort de rappel, lorsque ledit volet air est actionné en retour, ceci toujours avec un déphase temporel par rapport au volet des gaz 6, non représenté à cette figure.

Pour cela, ledit secteur de couronne dentée 12 comprend une butée d'entrainement 53, apte à coopérer avec une butée d'entrainement 54 de la roue de pilotage 50, lorsque ledit volet air 5 passe de sa position plein ouvert à sa position plein fermé. Plus précisément, tel qu'illustré à la figure 10, ledit secteur de couronne dentée 12 est configuré pour que sa butée d'entrainement 53 se trouve angulairement en retrait de la butée d'entrainement 54 de la roue de pilotage 50 lors d'une première phase de rotation dudit secteur de couronne dentée 12, correspondant au passage de le vanne de la configuration de la figure 2a à celle de la figure 2b. Les deux butées d'entrainement 53, 54 viennent ensuite en contact et, lors d'une seconde phase de rotation du secteur de couronne dentée 12, ce dernier entraine la couronne de pilotage 50. Autrement dit, lors de cette seconde phase, le volet air est entrainé par le moteur de la vanne de sa position plein ouvert à sa position plein fermé.

Dans le sens de rotation inverse, en mode normal, le ressort entraine la roue de pilotage 50 qui plaque la butée d'entrainement 54 de ladite roue de pilotage contre la butée basse air 16 en position plein ouvert du volet air, tel que cela est illustré à la figure 10. La butée basse air 16 est ici issue de matière du corps de la vanne. La butée d'entrainement 54 présente une extension radiale pour coopérer avec la butée basse air 16.

On observe également à cette figure la butée haute air 31 permettant traiter le premier cas évoqué de disfonctionnement, c'est-à-dire celui d'une rupture des dentures des cinématiques. Ladite butée air haute 31 est ici issue de matière du corps de vanne. Dans ce même but, la roue de pilotage 50 est munie d'une butée de diagnostique 55 et ladite roue de pilotage 50 et ledit corps de vanne sont configurés pour que ladite butée air haute 31 et ladite butée de diagnostique 55 viennent en contact dans ledit premier cas de disfonctionnement.

Afin d'éviter les interférences entre butées, ladite butée de diagnostique 55 est située, par exemple, sur la face de la roue de pilotage 50 opposée à celles munies de la butée d'entrainement 54 et/ou à la périphérie de ladite roue de pilotage 50.

Pour traiter le second cas de disfonctionnement, ledit secteur de couronne dentée 12 comprend ici une butée de rappel 71, apte à coopérer avec une butée de rappel 52 de la roue de pilotage 50 dans le cas d'une défaillance desdits moyens de rappel.

Comme dans le précédent mode de réalisation, lesdites butées de rappel 71, 52 présente un décalage angulaire lorsque le volet air 5 est dans sa position plein ouvert, telle qu'illustré à la figure 10.

Ladite butée de rappel 52 de la roue de pilotage 50 est ici placée dans le prolongement angulaire de la butée d'entrainement 54 de ladite roue de pilotage et/ou sur la même face de ladite roue que celle-ci. Lesdites butées de rappel 52 et d'entrainement 54 de la roue de pilotage pourront prendre appui l'une sur l'autre à l'aide d'entretoise 56.

L'invention a été décrite avec une vanne trois-voies utilisée dans le cadre d'une boucle EGR, avec ouverture progressive de la voie EGR suivie d'une fermeture, avec un décalage temporel, de la voie Air. Elle peut parfaitement être mise en oeuvre sur tout type de vanne trois voies. En particulier, elle pourra être utilisée dans une vanne trois-voies, utilisée dans une autre application, avec notamment des sens différents pour l'ouverture et la fermeture des volets.

## Revendications

1. Vanne trois-voies à deux obturateurs (5, 6) respectivement disposés dans deux des trois voies (2, 3) de la vanne (1), ladite vanne comprenant des moyens de commande uniques (7-11) pour les deux obturateurs (5, 6) et des premier et second moyens d'actionnement (12, 13, 15, 50) agencés pour être commandés par les moyens de commande uniques (7-11) et entraîner, chacun, un des deux obturateurs (5, 6) de l'une à l'autre d'une première et d'une seconde position, lesdits moyens de commande (7-11) et d'actionnement (12, 13, 15, 50) étant configurés pour permettre aux deux obturateurs, dans un mode nominal de fonctionnement, d'atteindre simultanément leur seconde position respective, **caractérisée en ce que** ladite vanne comporte une butée (31) de déplacement maximal pour l'un au moins desdits moyens d'actionnement (12, 15, 50), ladite butée (31) étant configurée pour bloquer ledit moyen d'actionnement (12, 15, 50) lorsque l'obturateur (5) correspondant est dans sa seconde position, ladite vanne comprenant en outre des moyens pour détecter une course dudit autre obturateur (6) au-delà de sa seconde position.

2. Vanne trois-voies selon la revendication 1, dans laquelle lesdits moyens pour détecter une course de l'autre obturateur (6) au-delà de sa course nominale comprennent un moyen de mesure de la position dudit autre obturateur (6).

3. Vanne selon l'une des revendications 1 ou 2 dans laquelle ladite butée (31) de déplacement maximal est prévue pour bloquer ledit second moyen d'actionnement (12, 15, 50) et lesdits moyens pour détecter une course de l'autre obturateur au-delà de sa course nominale comprennent une butée (33) du premier moyen d'actionnement (13), configurée pour être positionnée au delà de la position qu'a ledit premier moyen d'actionnement (13) lorsque le second moyen d'actionnement (12, 15, 50) est sur sa butée (31) en mode de fonctionnement nominal.

4. Vanne selon la revendication 3 dans laquelle lesdits moyens pour détecter une course de l'autre obturateur au-delà de sa course nominale comprennent en outre une butée de fin course (63), prévue sur ledit premier moyen d'actionnement (13) et un détecteur de contact entre lesdites butées (63) de fin de course et (33) dudit premier moyen d'actionnement (13).

5. Vanne trois-voies selon l'une des revendications 3 ou 4, dans laquelle lesdits obturateurs (5, 6) sont des volets, lesdits moyens de commande (7-11) et d'actionnement (12, 13, 15, 50) sont configurés pour entraîner lesdits volets en pivotement et les premier et second moyens d'actionnement comportent des secteurs de couronnes dentées (12, 13).

6. Vanne trois-voies selon la revendication 5 dans laquelle ladite butée (33) du premier moyen d'actionnement est disposée en vis-à-vis d'une des faces (63) formant extrémité du secteur (13) de couronnes dentées correspondant.

7. Vanne trois-voies selon l'une des revendications 5 ou 6, dans laquelle le second moyen d'actionnement comprend en outre un doigt (15) circulant dans une échancrure (17) formée dans le secteur de couronne dentée (12) du second moyen d'actionnement, la butée (31) associée audit second moyen d'actionnement étant solidaire du corps de la vanne (1) et positionnée en vis-à-vis dudit doigt (15).

8. Vanne trois-voies selon l'une des revendications 5 ou 6 dans laquelle le second moyen d'actionnement comporte en outre une roue de pilotage (50), liée en rotation au premier volet et libre en rotation par rapport audit secteur de couronne dentée (12), ladite roue de pilotage (50) étant apte à être entraînée par ledit secteur de couronne dentée (12), lorsque ledit premier volet passe de sa première position à sa seconde position.

9. Vanne trois-voies selon la revendication 8 dans laquelle ladite roue de pilotage (50) comporte une butée de diagnostique (55) configurée pour venir en butée contre la butée (31) de déplacement maximal (31) lorsque le second obturateur (5) est dans sa seconde position.

10. Vanne trois-voies selon l'une quelconque des revendications précédentes dans laquelle lesdites première et seconde positions sont des positions d'ouverture et de fermeture d'une des voies (2, 3).

11. Vanne trois voies selon l'une quelconque des revendications précédentes dans laquelle lesdits moyens de commande (7-11) et d'actionnement (12, 13, 15, 50) sont configurés pour entraîner lesdits obturateurs (5, 6) avec un déphasage temporel de sorte que tout en continuant de déplacer le premier obturateur (6) de sa première position vers sa seconde position par l'intermédiaire du premier moyen d'actionnement (13) pour ouvrir, respectivement fermer, la voie correspondante (3), on commence déplacer le second obturateur (5) de sa première position vers sa seconde position par l'intermédiaire du second moyen d'actionnement (12, 15, 50), pour fermer, respectivement ouvrir, la voie (2) correspondante.

12. Vanne trois-voies selon la revendication 11, dans laquelle ledit second moyen d'actionnement (15) est rappelé par un ressort de rappel de sa seconde position vers sa première position.

13. Vanne trois voies selon l'une des revendications précédentes, dans laquelle les obturateurs (5, 6) sont disposés dans ses deux voies d'entrée (2, 3), la vanne étant alors une vanne de boucle EGR pour côté froid, reliée au collecteur d'admission d'un moteur à combustion interne d'un véhicule automobile.

14. Procédé de test de l'intégrité de la chaîne cinématique d'une vanne trois-voies (1) selon l'une quelconque des revendications précédentes comportant une étape de mise en mouvement dudit premier moyen d'actionnement (13) par lesdits moyens de commande unique (7-11), depuis la première position de l'obturateur associé (6) en direction de la seconde position dudit obturateur, suivie d'une étape de mesure de la position extrême atteinte par ledit volet.

## Patentansprüche

1. Dreiwegeventil mit zwei Verschlusselementen (5, 6), die jeweils in zwei der drei Wege (2, 3) des Ventils (1) angeordnet sind, wobei das Ventil einzige Steuermittel (7-11) für die beiden Verschlusselemente (5, 6) und erste und zweite Betätigungsmittel (12, 13, 15, 50) umfasst, die derart angeordnet sind, dass sie von den einzigen Steuermitteln (7-11) gesteuert werden und jeweils eines der beiden Verschlusselemente (5, 6) von einer ersten in eine zweite Position antreiben, wobei die Steuermittel (7-11) und die Betätigungsmittel (12, 13, 15, 50) derart ausgeführt sind, dass sie es den beiden Verschlusselementen in einem Nominalbetriebsmodus ermöglichen, gleichzeitig ihre jeweilige zweite Position zu erreichen, **dadurch gekennzeichnet, dass** das Ventil einen Anschlag (31) für die maximale Verschiebung mindestens eines der Betätigungsmittel (12, 15, 50) umfasst, wobei der Anschlag (31) derart ausgeführt ist, dass er das Betätigungsmittel (12, 15, 50) feststellt, wenn das entsprechende Verschlusselement (5) in seiner zweiten Position ist, wobei das Ventil ferner Mittel umfasst, um eine Wegstrecke des anderen Verschlusselements (6) über seine zweite Position hinaus zu erfassen.

2. Dreiwegeventil nach Anspruch 1, bei dem die Mittel zur Erfassung einer Wegstrecke des anderen Verschlusselements (6) über ihre Nominalstrecke hinaus ein Mittel zum Messen der Position des anderen Verschlusselements (6) umfassen.

3. Ventil nach einem der Ansprüche 1 oder 2, bei dem der Anschlag (31) für die maximale Verschiebung dazu vorgesehen ist, das zweite Betätigungsmittel (12, 15, 50) und die Mittel zur Erfassung einer Wegstrecke des anderen Verschlusselements über seine nominale Strecke hinaus einen Anschlag (33) des ersten Betätigungselements (13) umfassen, der derart ausgeführt ist, dass er über die Position, die das erste Betätigungselement (13) innehat, hinaus positioniert wird, wenn das zweite Betätigungsmittel (12, 15, 50) an seinem Anschlag (31) im Nominalbetriebsmodus ist.

4. Ventil nach Anspruch 3, bei dem die Mittel zur Erfassung einer Wegstrecke des anderen Verschlusselements über seine Nominalstrecke hinaus ferner einen Endanschlag (63), der auf dem ersten Betätigungsmittel (13) vorgesehen ist, und einen Kontaktgeber zwischen den Endanschlägen (63) und (33) des ersten Betätigungsmittels (13) umfassen.

5. Dreiwegeventil nach einem der Ansprüche 3 oder 4, bei dem die Verschlusselemente (5, 6) Klappen sind, wobei die Steuer- (7-11) und Betätigungsmittel (12, 13, 15, 50) derart ausgeführt sind, dass sie die Klappen schwenken, und die ersten und zweiten Betätigungsmittel Zahnkranzabschnitte (12, 13) umfassen.

6. Dreiwegeventil nach Anspruch 5, bei dem der Anschlag (33) des ersten Betätigungsmittels gegenüber einer der Seiten (63) angeordnet ist, die ein Ende des entsprechenden Zahnkranzabschnitts (13) bildet.

7. Dreiwegeventil nach einem der Ansprüche 5 oder 6, bei dem das zweite Betätigungsmittel ferner einen Finger (15) umfasst, der in einem bogenförmigen Ausschnitt (17) umläuft, der in dem Zahnkranzabschnitt (12) des zweiten Betätigungsmittels ausgebildet ist, wobei der mit dem zweiten Betätigungsmittel verbundene Anschlag (31) mit dem Körper des Ventils (1) verbunden und gegenüber dem Finger (15) angeordnet ist.

8. Dreiwegeventil nach einem der Ansprüche 5 oder 6, bei dem das zweite Betätigungsmittel ferner ein Steuerrad (50) umfasst, das in Drehung mit der ersten Klappe verbunden und in Bezug zum Zahnkranzabschnitt (12) frei drehbar ist, wobei das Steuerrad (50) geeignet ist, von dem Zahnkranzabschnitt (12) angetrieben zu werden, wenn die erste Klappe von ihrer ersten Position in ihre zweite Position übergeht.

9. Dreiwegeventil nach Anspruch 8, bei dem das Steuerrad (50) einen Diagnoseanschlag (55) umfasst, der derart ausgeführt ist, dass er am Anschlag (31) für die maximale Verschiebung (31) anschlägt, wenn das zweite Verschlusselement (5) in seiner zweiten Position ist.

10. Dreiwegeventil nach einem der vorhergehenden Ansprüche, bei dem die erste und die zweite Position Öffnungs- und Verschlusspositionen eines der Wege (2, 3) sind.

11. Dreiwegeventil nach einem der vorhergehenden Ansprüche, bei dem die Steuer- (7-11) und Betätigungsmittel (12, 13, 15, 50) derart ausgeführt sind, dass sie die Verschlusselemente (5, 6) mit einer zeitlichen Verschiebung antreiben, so dass bei Fortsetzung der Verschiebung des ersten Verschlusselements (6) aus seiner ersten Position in seine zweite Position mit Hilfe des ersten Betätigungsmittels (13), um den entsprechenden Weg (3) zu öffnen bzw. zu schließen, mit der Verschiebung des zweiten Verschlusselements (5) aus seiner ersten Position in seine zweite Position mit Hilfe des zweiten Betätigungsmittels (12, 15, 50) begonnen wird, um den entsprechenden Weg (2) zu schließen bzw. zu öffnen.

12. Dreiwegeventil nach Anspruch 11, bei dem das zweite Betätigungsmittel (15) durch eine Rückstellfeder von seiner zweiten Position in seine erste Position zurückgestellt wird.

13. Dreiwegeventil nach einem der vorhergehenden Ansprüche, bei dem die Verschlusselemente (5, 6) in seinen beiden Eingangswegen (2, 3) angeordnet sind, wobei das Ventil in diesem Fall ein AGR-Ventil kaltseitig ist, das mit dem Ansaugkrümmer eines Verbrennungsmotors eines Kraftfahrzeugs verbunden ist.

14. Verfahren zum Testen der Integrität der kinematischen Kette eines Dreiwegeventils (1) nach einem der vorhergehenden Ansprüche, umfassend einen Schritt der Ingangsetzung des ersten Betätigungsmittels (13) durch die einzigen Steuermittel (7-11) von der ersten Position des zugehörigen Verschlusselements (6) in Richtung der zweiten Position des Verschlusselements, gefolgt von einem Schritt des Messens der von der Klappe erreichten äußersten Position.

## Claims

1. Three-way valve with two gates (5, 6) respectively arranged in two of the three pathways (2, 3) of the valve (1), said valve comprising single control means (7-11) for the two gates (5, 6) and first and second actuation means (12, 13, 15, 50) arranged to be controlled by the single control means (7-11) and to each drive one of the two gates (5, 6) from one to the other of a first and a second position, said control (7-11) and actuation (12, 13, 15, 50) means being configured to enable the two gates, in a nominal operating mode, to simultaneously reach their respective second positions, **characterized in that** said valve includes a maximum displacement end-stop (31) for at least one of said actuation means (12, 15, 50), said end-stop (31) being configured to block said actuation means (12, 15, 50) when the corresponding gate (5) is in its second position, said valve also comprising means for detecting a travel of said other gate (6) beyond its second position.

2. Three-way valve according to Claim 1, in which said means for detecting a travel of the other gate (6) beyond its nominal travel comprise a means for measuring the position of said other gate (6).

3. Valve according to either of Claims 1 and 2, in which said maximum displacement end-stop (31) is designed to block said second actuation means (12, 15, 50) and said means for detecting a travel of the other gate beyond its nominal travel comprise an end-stop (33) for the first actuation means (13), configured to be positioned beyond the position of said first actuation means (13) when the second actuation means (12, 15, 50) is on its end-stop (31) in nominal operating mode.

4. Valve according to Claim 3, in which said means for detecting a travel of the other gate beyond its nominal travel also comprise an end-of-travel end-stop (63), provided on said first actuation means (13) and a detector of contact between said end-of-travel end-stop (63) and the end-stop (33) of said first actuation means (13).

5. Three-way valve according to either of Claims 3 and 4, in which said gates (5, 6) are flaps, said control (7-11) and actuation (12, 13, 15, 50) means are configured to drive said flaps pivot-wise and the first and second actuation means include toothed crown ring segments (12, 13).

6. Three-way valve according to Claim 5, in which said end-stop (33) of the first actuation means is arranged facing one of the faces (63) forming the end of the corresponding toothed crown ring segment (13).

7. Three-way valve according to either of Claims 5 and 6, in which the second actuation means also comprises a pawl (15) circulating in a scallop (17) formed in the toothed crown ring segment (12) of the second actuation means, the end-stop (31) associated with said second actuation means being attached to the body of the valve (1) and positioned facing said pawl (15).

8. Three-way valve according to either of Claims 5 and 6, in which the second actuation means also includes a control wheel (50), linked in rotation to the first flap and free in rotation relative to said toothed crown ring segment (12), said control wheel (50) being able to be driven by said toothed crown ring segment (12) when said first flap switches from its first position to its second position.

9. Three-way valve according to Claim 8, in which said control wheel (50) includes a diagnostic end-stop (55) configured to abut against the maximum displacement end-stop (31) when the second gate (5) is in its second position.

10. Three-way valve according to any one of the preceding claims, in which said first and second positions are open and closed positions of one of the pathways (2, 3).

11. Three-way valve according to any one of the preceding claims, in which said control (7-11) and actuation (12, 13, 15, 50) means are configured to drive said gates (5, 6) with a temporal phase-shift so that, while continuing to displace the first gate (6) from its first position to its second position via the first actuation means (13) to open, respectively close, the corresponding pathway (3), the second gate (5) is made to begin to displace from its first position to its second position via the second actuation means (12, 15, 50), to close, respectively open, the corresponding pathway (2).

12. Three-way valve according to Claim 11, in which said second actuation means (15) is returned by a return spring from its second position to its first position.

13. Three-way valve according to one of the preceding claims, in which the gates (5, 6) are arranged in its two inlet pathways (2, 3), the valve then being an EGR loop valve for the cold side, linked to the intake manifold of an internal combustion engine of a motor vehicle.

14. Method for testing the integrity of the kinematic chain of a three-way valve (1) according to any one of the preceding claims, comprising a step for setting said first actuation means (13) in motion via said single control means (7-11), from the first position of the associated gate (6) towards the second position of said gate, followed by a step for measuring the extreme position reached by said flap.
